# EUROPEAN PATENT APPLICATION

(11) **EP 4 501 587 A1**
(43) Date of publication of application: **05.02.2025**
(21) Application number: 23189119.3
(22) Date of filing: 02.08.2023
(51) Int. Cl.: B29C 53/08, B29L 23/00, B31D 5/00, B31F 1/00

(54) **APPARATUS FOR BENDING STRAWS**

(71) Applicant: International Tobacco Machinery Poland Sp. z o.o., 26-600 Radom (PL)
(72) Inventor: OWCZAREK, Radoslaw, 26-600 Radom (PL); Slawomir, SMAGOWSKI, 26-600 Radom (PL)
(74) Representative: Markieta, Jaroslaw Franciszek

(57) **Abstract**

An apparatus (1) for bending straws (2) having a first end (20) and a second end (22) connected by a bending section (21) comprises:

a conveyor (5) for conveying the straws (2) provided with a plurality of slots (10) adapted for holding the first ends (21) of the straws (2), the slots (10) being arranged side by side on a working surface (30) of the conveyor (5),

a bending unit (6) provided with a thrust element (11) fixed relative to the conveyor (5) and determining the axis of the bend of the straw (2) and also a bending element (12) adapted for bending the straws (2) around the thrust element (11).

The bending element (12) is attached on a front surface (3) of the conveyor (5), perpendicular to the working surface (30) of the conveyor (5).

## Description

The object of the invention is an apparatus for bending straws. The invention finds application in the food industry, in particular in the production of drinking straws.

An apparatus for creasing straws on a drum conveyor is known from the document WO2021/250711A1. The document discloses an apparatus for bending straws wherein each straw is provided with a flexible part configured to allow the straw to be bent. The straws are arranged, at least temporarily, on positioning elements, while each bending element allows the corresponding straw to be bent in its flexible part. It is typical for the solution from the prior art that the bending elements of the straws are attached on the circumferential surface of the drum conveyor, on the same surface on which the straw positioning elements are attached. Any change in the specification of the straw, e.g. its length, requires conveyor retooling, involving a replacement of at least some of its components or parts, in order to obtain a dimensionally adapted set of bending and positioning elements.

In the prior art, there is a problem associated with a change in the specification of the produced straws resulting in the need to retool the bending apparatuses. In particular, this concerns a change of specification resulting in a change of the position in which the straw is bent on the apparatus. In the prior art, this can result in a replacement of the drum or a change in the position of components situated on the working surface of the drum conveyor, the access to which is naturally difficult, and the change itself is cumbersome to carry out and often results in the need to replace the entire conveyor drum or linear conveyor belt.

The object of the invention is an apparatus for bending straws comprising a first end and a second end, connected by an area adapted for bending, the apparatus comprising: a conveyor for conveying the straws provided with a plurality of slots adapted for holding the first ends of the straws, the slots being arranged side by side on a working surface of the conveyor, a bending unit provided with a thrust element fixed relative to the conveyor, the thrust element determining the axis of bending of the straw, and a bending element adapted for bending the straws around the thrust element. The apparatus according to the invention is characterised in that the bending element is attached on the front surface of the conveyor, perpendicular to the working surface of the conveyor.

Preferably, the apparatus according to the invention is characterised in that the conveyor is a drum conveyor.

Preferably, the apparatus according to the invention is characterised in that the conveyor is a belt/chain conveyor.

Preferably, the apparatus according to the invention is characterised in that the bending element of the bending mechanism operates in a closed cycle.

Preferably, the apparatus according to the invention is characterised in that the path along which the bending elements move at least partially coincides with the path of movement of the second ends of the straws on the conveyor.

Preferably, the apparatus according to the invention is characterised in that the bending element makes a substantially rotational movement.

Preferably, the apparatus according to the invention is characterised in that the axis of rotation of the bending element is perpendicular to the working surface of the conveyor.

Preferably, the apparatus according to the invention is characterised in that the axis of rotation of the bending element is situated at an angle other than 90° to the working surface of the conveyor.

Preferably, the apparatus according to the invention is characterised by having an adjusting unit for changing the position of the bending mechanism relative to the conveyor.

Preferably, the apparatus according to the invention is characterised in that the adjusting unit is adapted for altering the position of the bending mechanism relative to the front surface of the conveyor.

Preferably, the apparatus according to the invention is characterised in that the slot is adapted for holding the first end of the straw.

The apparatus according to the invention has the advantage of reducing the number of operations and parts required to adapt the apparatus to a new straw specification.

The object of the invention is shown in more detail in a preferred embodiment in a drawing in which:
- Fig. 1: shows an apparatus in a preferred embodiment of the invention;
- Fig. 2: shows the apparatus in the preferred embodiment of the invention in a top view with the first type of straws;
- Fig. 3: shows the apparatus in a preferred embodiment of the invention in a top view with the second type of straws;
- Fig. 4: shows an apparatus in the second embodiment of the invention:
- Fig. 5: shows a bending unit in a top view;
- Fig. 6: shows the bending unit in a rear view;
- Fig. 7: shows a fragment of a conveyor of the apparatus according to another embodiment in a front view.
- Fig. 8: shows a section of the apparatus in another embodiment with a chain conveyor.

In the food industry, the use of bendable straws as an accessory for carton beverage packaging is a common solution. In order to reach the bottom of the carton pack, the straw has to be longer than the height of the pack, for this purpose bendable straws are used, for example U-shaped straws that are glued to the pack, with the length of the straw when folded being not greater than the maximum dimension of the pack. The straw **2** has a first end **20,** a bendable area **21** and a second end **22** with a tip **23.**

The straw **2** can be made of plastic, nowadays it is more often a paper product due to environmentally friendly consumer preferences. The area **21** is usually a section of the straw that has been creased to allow the straw **2** to be bent without destroying its structure, whereas various shapes and ways of creasing in the area **21** are known.

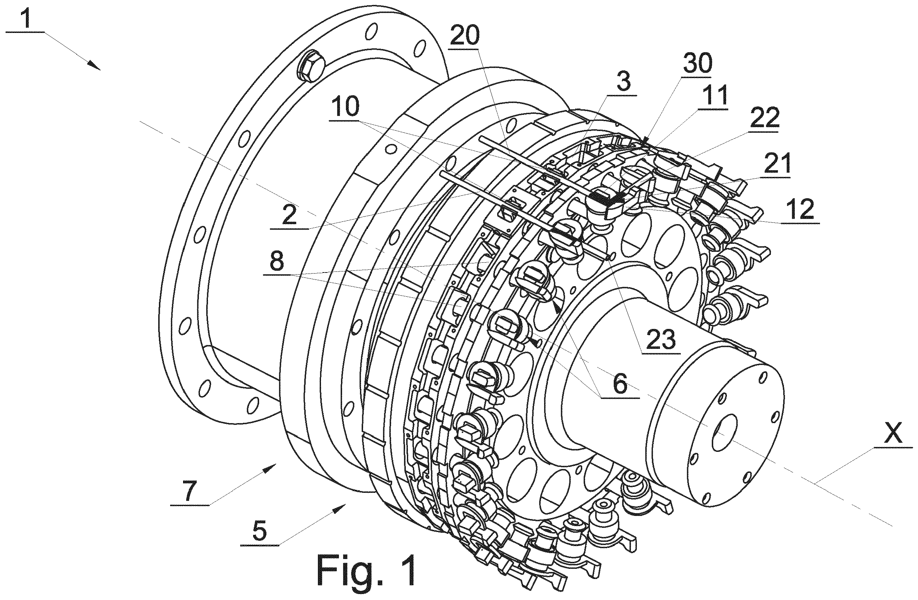

**Fig. 1** shows a diagrammatic representation of an apparatus 1 for bending straws according to a preferred embodiment of the invention. In this embodiment, a number of slots **10** adapted for holding the first end **20** of the straws **2** in a position parallel to a working surface **30** of the conveyor are mounted on the drum conveyor **5,** the parallelism of the first end **20** of the straws **2** to the working surface **30** of the conveyor being a technological condition advantageously influencing the process of conveying the straws, in particular in the case of drum conveyors.

In the preferred embodiment of **Fig. 1****,** a bending unit **6** is attached by means of a support **8** on the front surface **3** of the conveyor **5,** being preferably perpendicular to the working surface **30** of the conveyor. The bending unit **6** comprises two main functional units, the first comprising a thrust element **11** which remains stationary relative to the working surface **30** of the conveyor, and a bending element **12** which moves along a path running substantially around the thrust element **11,** the bending element **12** being adapted for bending the second end **22** of the straw **2** around the thrust element **11.**

In **Fig. 1****,** for the sake of clarity of the drawing, the drive system actuating the bending element **12** is not shown, typically it is a mechanical system controlled and driven by means of a cam in combination with a gear system of an arrangement typical for power transmission of conveyors. Such an arrangement may consist of a cam, a gear race, and a gear wheel.

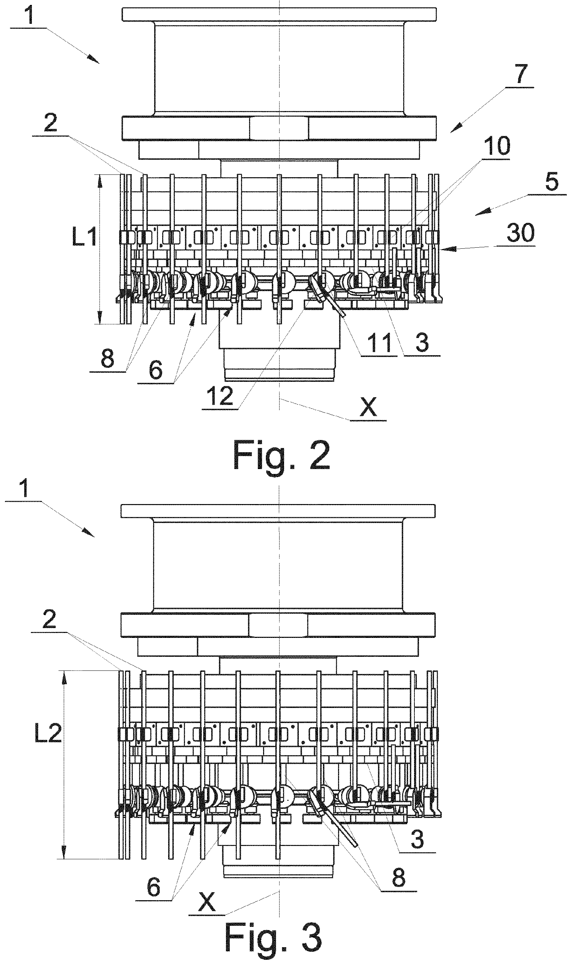

In the event of a change in the specification, in particular a change in the length of the straw **2,** it is possible to quickly adapt the apparatus **1** to a new size of the straws. By means of an adjusting unit **7,** which in this embodiment is situated inside the conveyor **5,** the bending units **6** placed on the supports **8** are moved away from or pushed close to the front surface **3** of the conveyor **5,** as shown in **Fig. 2** and **Fig. 3****.** Alternatively, a solution is also possible wherein the adaptation of the apparatus **1** to the new size of the straws is carried out manually by moving away or pushing close, from or to the front surface **3** of the conveyor **5,** the bending units **6** placed on the supports **8** which are, for example, additionally connected by a common retaining ring.

In **Fig. 2****,** a top view shows the apparatus **1** provided with the conveyor **5,** whereas in this embodiment it is a drum conveyor having slots **10** situated on the cylindrical working surface **30,** adapted for conveying the straws **2** of the length **L1.** When changing the specification, in particular changing the length of the straw **2** from length **L1** to a greater length **L2,** by means of the adjusting unit **7** situated inside the conveyor **5,** the bending units **6** placed on the supports **8** are moved away from the front surface **3** along the rotational axis **X** of the conveyor **5.** Due to this solution, it is possible to easily and quickly adapt the apparatus 1 to any length of the straw **2** without having to change the apparatus **1** for a new one adapted for working with straws of a different length or having to change the position of each bending unit **6** separately. The apparatus **1,** which has been adjusted and adapted for working with the straws **2** of the length **L2,** is shown in **Fig. 3****.**

When bending the straw **2** around the thrust element **11,** the bent second end of the straw **21** passes over the next adjacent straw **2** and the bending element **12.**

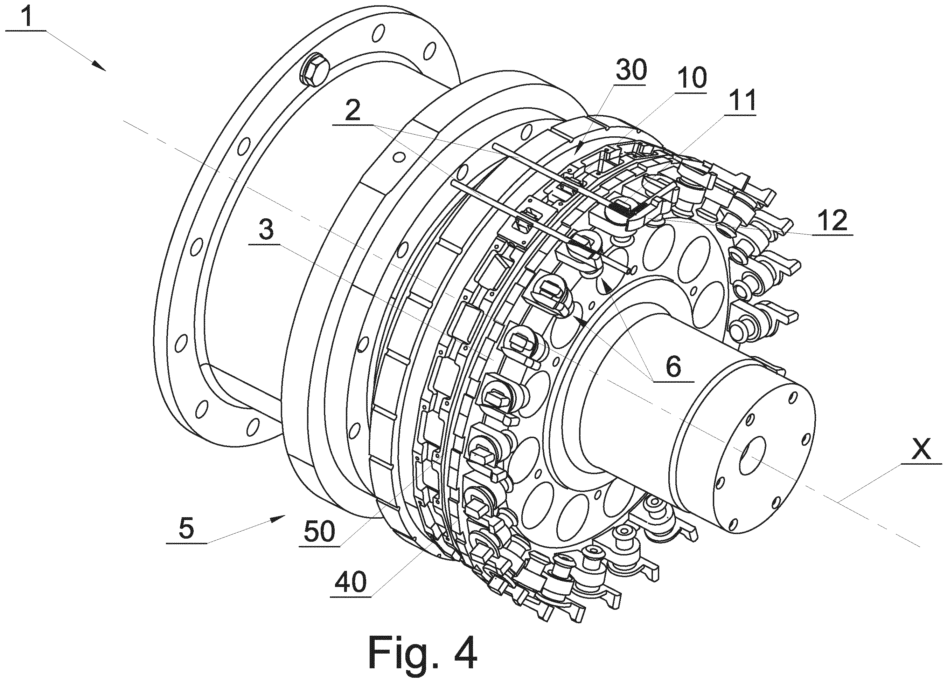

**Fig. 4** shows the apparatus **1** for bending the straws **2** in a second embodiment wherein the bending units **6** are attached to the front surface **3** of the conveyor **5,** more precisely to the front surface of the disc **40** being a component part of the conveyor **5.** The bending units **6** are attached to the disc **40** by means of screws **4** and holes **4',** as shown in more detail in the following figures.

In this embodiment, the conveyor **5** is provided with two spacer discs **40, 50** which are used to adjust the distance between the slot **10** and the bending unit **6,** in particular the thrust element **11.** Due to the introduction of mounting on the front surface to the disc **40,** it is possible to easily retool the apparatus for bending the straws **2** of a different length, as it is sufficient to add another or remove a spacer disc **50** already fitted to the conveyor **5.** The discs **40, 50** can be fixed to the front surface of the conveyor **5** by means of only a few fixing screws (not shown), which reduces the time for removing the entire unit with the discs **40, 50.**

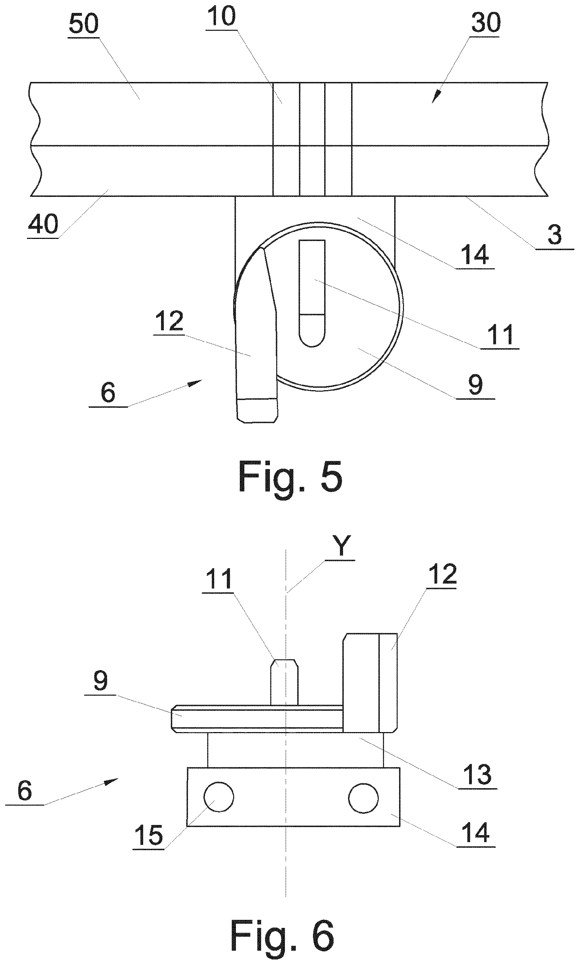

**Fig. 5** shows a top view of the bending unit **6** according to the second embodiment in a position mounted to the disc **40,** in a configuration with the spacer disc **50** mounted on the drum conveyor **5.** The working surface **30** of the drum conveyor is perpendicular to the front surface **3** which in this case is the front surface of the disc **40.**

**Fig. 6** shows the bending unit **6** with the bending element **12** which is situated on a rotating ring **9** attached to the flange of a stub shaft **13.** The ring **9** together with the bending element **12** perform a rotational movement about the rotational axis **Y** while the thrust element **11** remains stationary together with the stub shaft **13.** The stub shaft **13** comprises a mounting flange **14** provided with mounting holes **15** for fixing with the screws **4'** in the holes **4** made in the front surface **3** of the conveyor **5.**

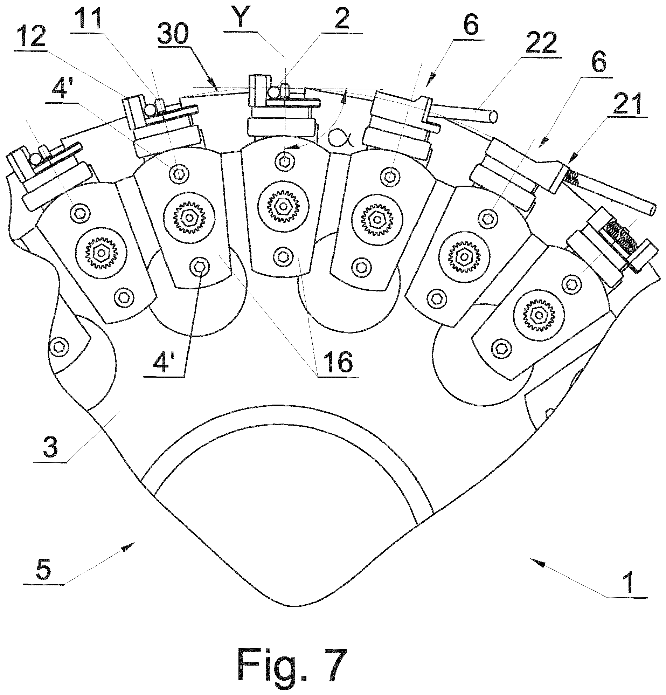

**Fig. 7** shows in side view of a section of the conveyor **5** of the apparatus **1** in another embodiment with the bending units **6** fixed to the front surface **3.**

In this embodiment, the bending units **6** are fixed to the front surface **3** of the conveyor **5** by means of the screws **4'** and the spacer plates **16.** Depending on the length of the straw **2** that is conveyed and bent on the conveyor **5,** the thickness of the spacer plates **16** is selected accordingly so that the thrust element **11** is situated in an area **21** adapted for bending.

In this embodiment, the rotational axis **Y** of the bending element **12** is situated at an angle α 90° to the working surface **30** of the conveyor **5.** Since the working surface **30** of the conveyor **5** is substantially a circle, the angle is measured exactly between the tangent of the circle defined by the working surface **30** at the point of intersection with the rotational axis **Y** of the bending mechanism **6.**

**Fig.7** shows the process of bending the straw **2** by means of the bending element **12** which, by performing a rotational movement around its rotational axis **Y**, simultaneously bends the straw **2** in the area **21** around the thrust element **11.** At the same time, the other end of the straw **22** performs a movement over the straw **2** situated in the adjacent slot **10.** Such a movement allows denser positioning of the slots **10** on the working surface **30** of the conveyor **5,** thus allowing to increase the capacity of the apparatus **1.** This is possible due to suitable angular positioning of the bending element, and more precisely of its rotational axis **Y**, with respect to the working surface **30.**

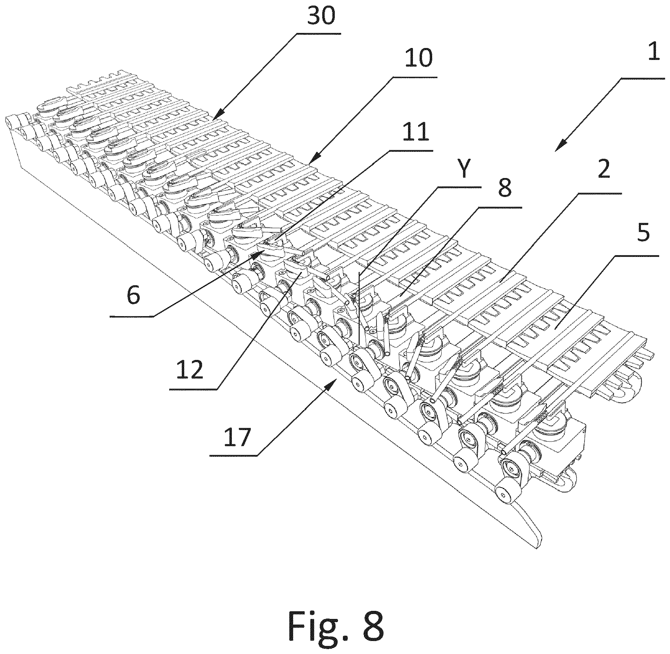

**Fig. 8** shows a section of the apparatus **1** in another embodiment wherein the conveyor **5** is a chain conveyor.

The straws **2** are conveyed in the slots **10** on the working surface **30** of the conveyor **5** in parallel one next to another. For the sake of better clarity of the figure, the method of securing the straws **2** in the slots **10** is not shown. However, this can be carried out by means known to a specialist in the field, for example, with holding clamps or with a second conveyor moving parallel to the conveyor **5** which will hold the straws **2** from above during bending. The other end of the straw **22** is placed in the bending mechanism **6** which, by means of the supports **8,** is attached to the front surface **3** of the conveyor **5.** During the bending of the straw **2,** the bending element **12** makes a rotational movement around the axis **Y**, pushing on the other end **22** of the straw **2** and causing it to bend around the thrust element **11.** In this embodiment, the rotational movement of the bending element **12** is forced by a cam **17.**

In all embodiments, preferably an apparatus **1** for bending the straws **2** having the first end **20** and the second end **22** connected by the area **21** adapted for bending, the apparatus comprising: the conveyor **5** for conveying the straws **2** provided with a plurality of slots **10** adapted for holding the first ends **21** of the straws **2,** the slots **10** being arranged side by side on the working surface of the conveyor **30,** the bending unit **6** provided with the thrust element **11** fixed stationary relative to the conveyor **5,** the thrust element **11** determining the axis of bending of the straw **2,** and the bending element **12** adapted for bending the straws around the thrust element **11.** The apparatus **1** according to the invention is characterised in that the bending element **12** is attached on the front surface **3** of the conveyor **5,** perpendicular to the working surface **30** of the conveyor **5.**

In a preferred embodiment, the conveyor **5** on which the bending unit **6** is mounted is a drum conveyor.

In another preferred embodiment, the conveyor **5** is a belt/chain conveyor, substantially a linear conveyor.

In all embodiments, the bending element **12** of the bending mechanism **6** operates in a closed cycle.

In all embodiments, the path along which the bending elements **12** move at least partly coincides with the path of movement of the second ends **22** of the straws **2** on the conveyor.

In the preferred embodiments, the bending element **12** makes a substantially rotational movement, also in all embodiments the axis **Y** of rotation of the bending element **12** is perpendicular to the working surface **30** of the conveyor **5.** However, in other preferred embodiments, the axis **Y** of rotation of the bending element **12** is positioned at an angle other than 90 to the working surface **30** of the conveyor **5.**

In other preferred embodiments, the apparatus **1** according to the invention has an adjusting unit **7** for changing the position of the bending mechanism **6** relative to the conveyor **5,** the adjusting unit **7** being adapted for altering the position of the bending mechanism **6** relative to the front surface **30** of the conveyor **5.**

In the preferred embodiments, the slot **10** is adapted for holding the first end **21** of the straw **2** parallel to the working surface **30** of the conveyor **5,** whereas the holder may allow the straw **2** to rotate around its own longitudinal axis or may be so tight that such rotation is prevented.

## Claims

1. An apparatus (**1**) for bending straws (**2**) comprising a first end (**20**) and a second end (**22**), connected by an area (**21**) adapted for bending, the apparatus comprising:
a conveyor (**5**) for conveying the straws (**2**) provided with a plurality of slots (**10**) adapted for holding the first ends (**21**) of the straws (**2**), the slots (**10**) being arranged side by side on a working surface (**30**) of the conveyor (**5**),
a bending unit (**6**) provided with
a thrust element (**11**) fixed relative to the conveyor (**5**), the thrust element (**11**) determining the axis of bending of the straw (**2**), and
a bending element (**12**) adapted for bending the straws (**2**) around the thrust element (**11**),
**characterised in that**
the bending element (**12**) is attached on a front surface (**3**) of the conveyor (**5**), perpendicular to the working surface (**30**) of the conveyor (**5**).

2. The apparatus as in claim 1, **characterised in that** the conveyor (**5**) is a drum conveyor.

3. The apparatus as in claim 1, **characterised in that** the conveyor (**5**) is a belt/chain conveyor.

4. The apparatus as in any of the claims 1 to 3, **characterised in that** the bending element (**12**) of the bending mechanism (**6**) operates in a closed cycle.

5. The apparatus as in any of the claims 1 to 4, **characterised in that** the path along which the bending elements (**12**) move at least partially coincides with the path of movement of the second ends (**22**) of the straws (**2**) on the conveyor (**5**).

6. The apparatus as in any of claims 1 to 6, **characterised in that** the bending element (**12**) makes a substantially rotational movement.

7. The apparatus as in any of the claims 1 to 6, **characterised in that** the axis of rotation (**Y**) of the bending element (**12**) is perpendicular to the working surface (**30**) of the conveyor (**5**).

8. The apparatus as in any of the claims 1 to 6, **characterised in that** the axis of rotation (**Y**) of the bending element (**12**) is situated at an angle other than 90° to the working surface (**30**) of the conveyor (**5**).

9. The apparatus as in any of claims 1 to 9, **characterised by** having an adjusting unit (**7**) for altering the position of the bending mechanism (**6**) relative to the conveyor (**5**).

10. The apparatus as in claim 9, **characterised in that** the adjusting unit (**7**) is adapted for altering the position of the bending mechanism (**6**) relative to the front surface (**30**) of the conveyor (**5**).

11. The apparatus as in claim 10, **characterised in that** the slot (**10**) is adapted for holding the first end (**21**) of the straw (**2**).
